# FASCICULE DE BREVET EUROPEEN

(11) **EP 2 037 727 B1**
(45) Date de publication et mention de la délivrance du brevet: **05.01.2011**
(21) Numéro de dépôt: 07803891.6
(22) Date de dépôt: 19.06.2007
(51) Int. Cl.: A01D 89/00

(54) **MACHINE AGRICOLE POUR LA RECOLTE DES FOURRAGES**
LANDWIRTSCHAFTSMASCHINE ZUR ERNTE VON VIEHFUTTER
AGRICULTURAL MACHINE FOR HARVESTING FORAGE

(30) Priorité: 30.06.2006 FR 0652752
(43) Date de publication de la demande: 25.03.2009
(73) Titulaire: KUHN S.A., 67700 Saverne (FR)
(72) Inventeur: GANTZER, Christian, F-57915 Woustwiller (FR); Babler, Damion D., Albany, WI 53502 (US)
(74) Mandataire: Andres, Jean-Claude
(86) Numéro de dépôt international: PCT/FR2007/051464
(87) Numéro de publication internationale: WO 2008/000993

(56) Documents cités:
- EP-A1- 0 070 942
- FR-A1- 2 432 830
- GB-A- 2 215 971
- US-A- 3 924 391

## Description

La présente invention se rapporte à une machine agricole pour la récolte de fourrage comportant un bâti portant au moins un dispositif de ramassage de végétaux couchés sur le sol et au moins un dispositif de déplacement des végétaux ramassés, lequel dispositif de déplacement se situe à proximité du dispositif de ramassage et déplace lesdits végétaux transversalement à ce dernier.

Cette machine permet de ramasser des végétaux étalés sur le sol et de les déplacer latéralement en vue de les mettre en andains. Il est alors possible de ramasser ces andains par exemple au moyen d'une presse ou d'une ensileuse.

Une machine de ce type est connue dans la demande de brevet WO 2005/041638. Cette machine comporte plusieurs dispositifs de ramassage et dispositifs de déplacement afin d'augmenter sa largeur de travail. Sur cette machine les végétaux peuvent s'accumuler par moments au niveau de l'un quelconque des dispositifs de ramassage et de ce fait passer d'une manière irrégulière sur le dispositif de déplacement correspondant. Cela peut entraîner le blocage du dispositif de déplacement ainsi que la formation d'un andain de volume non constant pouvant perturber l'opération de ramassage de celui-ci avec la presse ou l'ensileuse.

Une machine conforme au préambule de la revendication 1 est décrite dans EP-A-070942.

La présente invention a notamment pour but de proposer une machine ramassant et déplaçant les végétaux d'une manière plus régulière.

A cet effet, une importante caractéristique de l'invention consiste en ce que la machine comporte un dispositif de guidage des végétaux qui se situe au moins partiellement à faible distance au-dessus du dispositif de ramassage et qui est supporté par des bras qui s'étendent vers l'arrière par-dessus le dispositif de déplacement et sont articulés par rapport au bâti au moyen d'axes sensiblement horizontaux situés près de leurs extrémités arrière et autour desquels ils peuvent pivoter d'un certain angle.

Ce dispositif de guidage coopère avec le dispositif de ramassage pour faire passer les végétaux d'une manière régulière sur le dispositif de déplacement. Il maintient ces végétaux en contact avec le dispositif de ramassage, ce qui favorise leur entraînement par ce dernier et évite ainsi toute accumulation néfaste.

Les bras porteurs qui s'étendent par-dessus le dispositif de déplacement et qui sont reliés à des supports du bâti sont éloignés des végétaux en déplacement. En conséquence, ces derniers ne risquent à aucun moment de s'accrocher auxdits bras et s'y accumuler.

Les articulations des bras supportant le dispositif de guidage permettent à tout le dispositif de guidage d'être proche du dispositif de ramassage tout en pouvant s'en éloigner, respectivement s'en rapprocher automatiquement en fonction de la densité des végétaux ramassés.

Selon une autre caractéristique de l'invention, les supports auxquels sont reliés les bras porteurs sont liés au bâti au moyen d'axes sensiblement horizontaux autour desquels ils peuvent être déplacés dans différentes positions. Lesdits supports permettent ainsi de déplacer le dispositif de guidage dans une position de travail telle que décrite ci-dessus et une position adaptée pour le transport.

D'autres caractéristiques et avantages de l'invention ressortiront de la description qui va suivre et qui se réfère aux dessins annexés qui représentent, à titre d'exemple non limitatif, une forme de réalisation de la machine selon l'invention.

Dans ces dessins :
- la figure 1 représente une vue d'ensemble d'un agencement selon l'invention en position de travail,
- la figure 2 représente une vue de détail de l'agencement selon la figure 1,
- la figure 3 représente une vue de côté de l'agencement selon la figure 1,
- la figure 4 représente une vue de côté de l'agencement dans une position de transport.

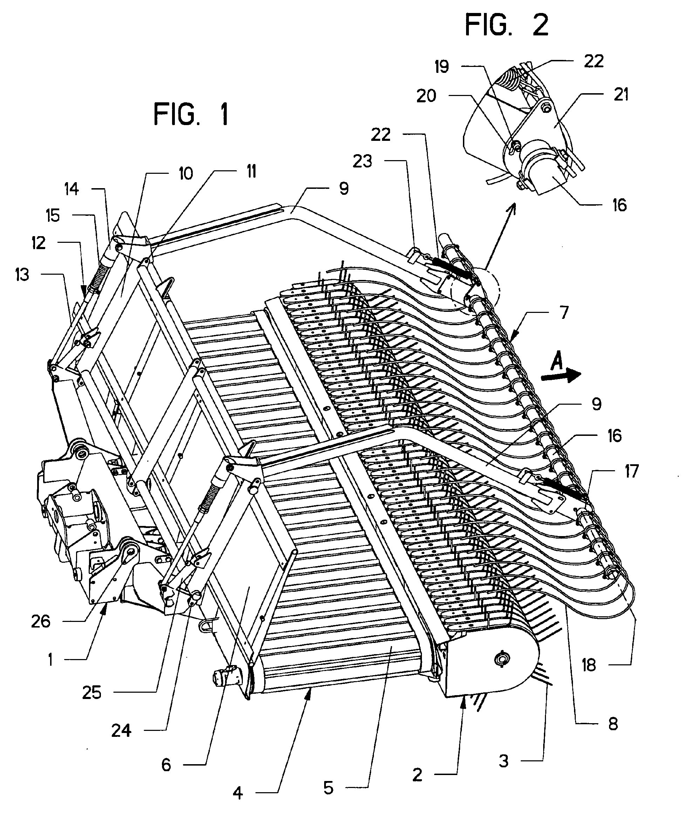

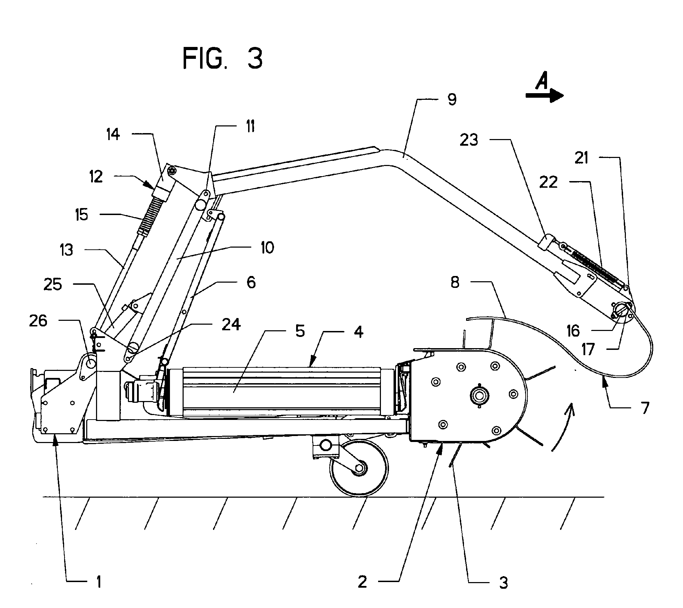

La machine agricole selon l'invention comporte un bâti (1) pouvant être relié d'une manière connue en soit à un tracteur permettant de la déplacer dans une direction d'avancement (A). Comme cela ressort des figures 1 à 3, ce bâti (1) porte un dispositif de ramassage (2) de végétaux au sol qui est du type pick-up. Il comporte un rotor avec des dents commandées (3) qui est entraîné en rotation de telle sorte que lesdites dents (3) ramassent les végétaux au niveau du sol, les soulèvent et les projettent vers l'arrière.

A l'arrière du dispositif de ramassage (2) est prévu un dispositif de déplacement (4) des végétaux. Ce dernier se situe à proximité immédiate du dispositif de ramassage (2) de sorte qu'il reçoive les végétaux projetés vers l'arrière par celui-ci. Ce dispositif de déplacement (4) est constitué par une bande transporteuse (5) qui est entraînée durant le travail de sorte qu'elle déplace lesdits végétaux transversalement au dispositif de ramassage (2), vers le côté droit ou le côté gauche de la machine. Les végétaux sont alors redéposés au sol sous la forme d'un andain en vue de leur reprise ultérieure. Sur le côté arrière du dispositif de déplacement (4) est disposé un déflecteur (6) sensiblement vertical qui limite la projection vers l'arrière des végétaux et les fait passer en totalité sur ledit dispositif de déplacement (4).

La machine peut comporter plusieurs dispositifs de ramassage (2) et dispositifs de déplacement (4) placés côte à côte, en vue d'augmenter sa largeur de travail.

Selon l'invention, un dispositif de guidage (7) des végétaux est disposé au moins partiellement au-dessus et à faible distance du dispositif de ramassage (2). Il est constitué par des tiges souples (8) qui sont sensiblement parallèles et qui s'étendent depuis l'avant du dispositif de ramassage (2) vers l'arrière en se rapprochant des extrémités des dents (3) de ce dernier. Lors du ramassage par les dents (3), les végétaux viennent en contact avec les tiges (8) et glissent le long de celles-ci vers l'arrière. Ces tiges (8) maintiennent en sus les végétaux en prise avec les dents (3) pour obtenir un acheminement régulier vers le dispositif de déplacement (4).

Le dispositif de guidage (7) est supporté par des bras (9) qui s'étendent vers l'arrière par-dessus le dispositif de déplacement (4) et qui sont reliés près de leurs extrémités arrière à des supports (10) liés au bâti (1). Ces bras (9) sont ainsi éloignés du dispositif de ramassage (2) et du dispositif de déplacement (4) afin de ne pas gêner les déplacements des végétaux.

Les bras (9) sont articulés sur lesdits supports (10) au moyen d'axes (11) sensiblement horizontaux situés près de leurs extrémités arrière. En position de travail, ces axes (11) sont positionnés au-dessus de la partie arrière du dispositif de déplacement (4). Les bras (9) peuvent pivoter d'un certain angle autour de ces axes (11). Cet angle de pivotement des bras (9) autour de ces axes d'articulation (11) est limité au moyen de butées (12). Chacune de ces butées (12) est constituée par une tige (13) dont l'une des extrémités est articulée sur le bâti (1) et l'autre extrémité est engagée dans un fourreau (14) qui est articulé sur l'extrémité d'un des bras (9). L'extrémité engagée dans le fourreau (14) est pourvue d'un épaulement situé entre deux arrêts placés aux deux extrémités dudit fourreau (14). Lesdits arrêts limitent le débattement possible du fourreau (14) par rapport à l'épaulement de la tige (13) et par conséquent l'angle de pivotement des bras (9) du dispositif de guidage (7) autour des axes d'articulation (11). Entre la tige (13) et le fourreau (14) de chaque butée (12) est disposé un ressort de compression (15). Celui-ci exerce une pression sur le fourreau (14) correspondant qui tend à faire pivoter les bras (9) et le dispositif de guidage (7) en direction du dispositif de ramassage (2) afin de maintenir ledit dispositif de guidage (7) en contact avec les végétaux déplacés. En sus, ce ressort (15) amortit les déplacements des bras (9) autour des axes d'articulation (11).

Les tiges (8) du dispositif de guidage (7) sont fixées sur une barre (16) logée dans un orifice (17) de chaque bras (9). Le diamètre de la barre (16) est légèrement inférieur à celui des orifices (17) de manière à pouvoir pivoter autour de son axe géométrique longitudinal (18). L'angle de pivotement autour de cet axe (18) est limité à une valeur d'environ 20° au moyen de butées (19) disposées sur les bras (9) et qui sont engagées dans des trous oblong (20) prévus dans des pattes (21) solidaires de la barre (16) (voir figure 2).

Des ressorts de traction (22) sont accrochés aux pattes (21) de la barre (16) et à des chapes (23) prévues sur les bras (9). Ces ressorts (22) tirent sur la barre (16) de manière à la faire pivoter avec l'ensemble des tiges (8) autour de l'axe longitudinal (18) en direction du dispositif de ramassage (2). Ce pivotement permet d'exercer une légère pression sur les végétaux afin de favoriser leur déplacement par les dents (3).

Les supports (10) des bras (9) sont liés au bâti (1) au moyen d'axes d'articulation (24) sensiblement horizontaux situés à l'arrière du dispositif de déplacement (4) et autour desquels ils peuvent être déplacés. Ces supports (10) forment ainsi avec les butées (12), les extrémités des bras (9) et des parties du bâti (1) des parallélogrammes déformables. Ces parallélogrammes permettent de déplacer et de maintenir les bras (9) et le dispositif de guidage (7) dans différentes positions où ils sont plus ou moins rapprochés du dispositif de ramassage (2) et du dispositif de déplacement (4). A cet effet, la machine comporte entre le bâti (1) et les supports (10) des vérins hydrauliques (25) permettant de déplacer ces supports (10) autour des axes (24). Ces vérins (25) peuvent être commandés depuis le tracteur afin qu'ils effectuent lesdits déplacements.

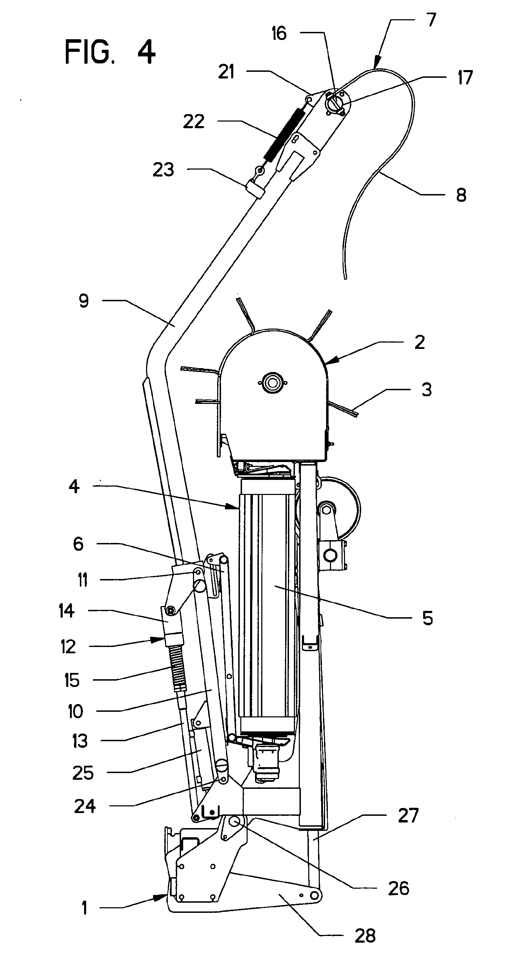

Cet agencement permet aussi de transposer la machine dans une position de transport sur route dans laquelle ses dimensions sont réduites (voir figure 4). Dans cette position, les bras (9) sont amenés dans une position très proche du dispositif de déplacement (4), le dispositif de guidage (7) se situant alors sensiblement dans le prolongement du dispositif de ramassage (2) et ces trois dispositifs (4, 7 et 2) étant en sus déplacés ensemble dans une position sensiblement verticale autour d'un axe sensiblement horizontal (26) du bâti (1). Ce déplacement en position sensiblement verticale est effectué au moyen d'un vérin hydraulique (27) placé sous le dispositif de déplacement (4) et s'appuyant sur un levier (28) du bâti (1). Dans cette position, ces dispositifs (4, 7 et 2) peuvent en sus être repliés ensemble vers l'arrière ou vers l'avant avec une partie du bâti (1), autour d'un axe sensiblement vertical, afin d'être orienté dans le sens d'avancement (A).

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini dans les revendications.

## Revendications

1. Machine agricole pour la récolte de fourrage comportant un bâti (1) portant au moins un dispositif de ramassage (2) de végétaux couchés sur le sol et au moins un dispositif de déplacement (4) des végétaux ramassés, lequel dispositif de déplacement (4) se situe à proximité du dispositif de ramassage (2) et déplace lesdits végétaux transversalement à ce dernier, la machine comportant en plus un dispositif de guidage (7) des végétaux qui se situe au moins partiellement au-dessus et à faible distance du dispositif de ramassage (2) et est supporté par des bras (9) qui s'étendent vers l'arrière par-dessus le dispositif de déplacement (4) **caractérisée par le fait que** les extrémités arrière desdits bras sont articulées par rapport au bâti (1) au moyen d'axes (11) sensiblement horizontaux situés, au travail, au-dessus de la partie arrière du dispositif de déplacement (4) et autour desquels ils peuvent pivoter d'un certain angle.

2. Machine agricole selon la revendication 1, ***caractérisée par le fait* que** les bras (9) sont articulés au moyen des axes (11) sensiblement horizontaux sur des supports (10) liés au bâti (1).

3. Machine agricole selon la revendication 2, ***caractérisée par le fait* qu'**elle comporte des butées (12) de limitation de l'angle de pivotement des bras (9) autour de leurs axes d'articulation (11) sur les supports (10).

4. Machine agricole selon la revendication 3, ***caractérisée par le fait* que** chaque butée (12) est constituée par une tige (13) reliée au bâti (1) et engagée dans un fourreau (14) qui est relié à un des bras (9) et qui comporte des arrêts limitant les déplacements du fourreau (14) et du bras (9) correspondant par rapport à la tige (13).

5. Machine agricole selon la revendication 4, ***caractérisée par le fait* qu'**elle comporte un ressort de compression (15) entre la tige (13) et le fourreau (14) de chaque butée (12).

6. Machine agricole selon la revendication 1, ***caractérisée par le fait* que** le dispositif de guidage (7) est logé dans un orifice (17) de chaque bras (9) de manière à pouvoir pivoter autour d'un axe géométrique longitudinal (18), d'un angle limité au moyen de butées (19).

7. Machine agricole selon la revendication 6, ***caractérisée par le fait* qu'**elle comporte au moins un ressort de traction (22) accroché à un bras (9) et au dispositif de guidage (7) de manière à faire pivoter ce dernier autour de l'axe géométrique longitudinal (18) en direction du dispositif de ramassage (2).

8. Machine agricole selon la revendication 1, ***caractérisée par le fait* que** les supports (10) sont liés au bâti (1) au moyen d'axes sensiblement horizontaux (24) autour desquels ils peuvent être déplacés dans différentes positions.

9. Machine agricole selon la revendication 8, ***caractérisée par le fait* que** des vérins hydrauliques (25) sont disposés entre le bâti (1) et les supports (10) pour déplacer ces derniers autour de leurs axes d'articulation (24) dans différentes positions.

10. Machine agricole selon l'une quelconque des revendications précédentes, ***caractérisée par le fait* que** les supports (10) forment avec les butées (12), les extrémités des bras (9) et des parties du bâti (1) des parallélogrammes déformables.

## Claims

1. Agricultural machine for the harvesting of forage comprising a frame (1) carrying at least one device (2) for picking up plants lying on the ground and at least one device (4) for moving the plants that have been picked up, which moving device (4) is situated close to the pickup device (2) and moves the said plants transversely to the latter, the machine additionally comprising a device (7) for guiding the plants that is situated at least partially above and at a short distance from the pickup device (2) and is supported by arms (9) which extend rearward above the moving device (4) ***characterized in that*** the rear ends of the said arms are articulated relative to the frame (1) by means of substantially horizontal axes (11) situated, during work, above the rear part of the moving device (4) and around which they may pivot through a certain angle.

2. Agricultural machine according to claim 1, ***characterized in that*** the arms (9) are articulated by means of the substantially horizontal axes (11) on supports (10) linked to the frame (1).

3. Agricultural machine according to claim 2, ***characterized in that*** it comprises abutments (12) for limiting the angle of pivoting of the arms (9) about their articulation axes (11) on the supports (10).

4. Agricultural machine according to claim 3, ***characterized in that*** each abutment (12) consists of a rod (13) connected to the frame (1) and engaged in a sheath (14) which is connected to one of the arms (9) and which comprises stops limiting the movements of the sheath (14) and of the corresponding arm (9) relative to the rod (13).

5. Agricultural machine according to claim 4, ***characterized in that*** it comprises a compression spring (15) between the rod (13) and the sheath (14) of each abutment (12).

6. Agricultural machine according to claim 1, ***characterized in that*** the guide device (7) is housed in an orifice (17) of each arm (9) so as to be able to pivot about a longitudinal geometric axis (18), at an angle limited by means of abutments (19).

7. Agricultural machine according to claim 6, ***characterized in that*** it comprises at least one draw-spring (22) hitched to an arm (9) and to the guide device (7) in order to cause the latter to pivot about the longitudinal geometric axis (18) in the direction of the pickup device (2).

8. Agricultural machine according to claim 3, ***characterized in that*** the supports (10) are connected to the frame (1) by means of substantially horizontal axes (24) about which they can be moved into various positions.

9. Agricultural machine according to claim 8, ***characterized in that*** hydraulic jacks (25) are arranged between the frame (1) and the supports (10) in order to move the latter about their articulation axes (24) into various positions.

10. Agricultural machine according to anyone of the preceding claims, ***characterized in that*** the supports (10) form deformable parallelograms with the abutments (12), the ends of the arms (9) and parts of the frame (1).

## Patentansprüche

1. Landwirtschaftliche Maschine zur Ernte von Viehfutter mit einem Gestell (1), das mindestens eine Vorrichtung zum Einsammeln (2) von auf dem Boden liegenden Pflanzen und mindestens eine Vorrichtung zur Beförderung (4) der eingesammelten Pflanzen umfasst, wobei die Beförderungsvorrichtung (4) in der Nähe der Pick-up-Vorrichtung (2) angeordnet ist und die Pflanzen quer zu letztgenannter verschiebt, wobei die Maschine zusätzlich eine Führungsvorrichtung (7) für die Pflanzen umfasst, die sich zumindest teilweise über und in geringem Abstand zu der Pick-up-Vorrichtung (2) befindet und von Armen (9) getragen wird, die sich nach hinten über die Beförderungsvorrichtung (4) erstrecken, ***dadurch gekennzeichnet,* dass** die hinteren Enden der Arme in Bezug zum Gestell (1) mittels im Wesentlichen horizontalen Achsen (11) angelenkt sind, die sich während der Arbeit über dem hinteren Teil der Beförderungsvorrichtung (4) befinden und um die sie um einen gewissen Winkel schwenken können.

2. Landwirtschaftliche Maschine nach Anspruch 1, ***dadurch gekennzeichnet,* dass** die Arme (9) mittels der im Wesentlichen horizontalen Achsen (11) auf mit dem Gestell (1) verbundenen Stützen (10) angelenkt sind.

3. Landwirtschaftliche Maschine nach Anspruch 2, ***dadurch gekennzeichnet,* dass** sie Anschläge (12) zur Begrenzung des Schwenkwinkels der Arme (9) um ihre Gelenkachsen (11) auf den Stützen (10) umfasst.

4. Landwirtschaftliche Maschine nach Anspruch 3, ***dadurch gekennzeichnet,* dass** jeder Anschlag (12) von einer Stange (13) gebildet ist, die mit dem Gestell (1) verbunden ist und in eine Hülse (14) eingreift, die mit einem der Arme (9) verbunden ist und Halterungen umfasst, die die Verschiebungen der Hülse (14) und des entsprechenden Arms (9) in Bezug zur Stange (13) begrenzen.

5. Landwirtschaftliche Maschine nach Anspruch 4, ***dadurch gekennzeichnet,* dass** sie eine Druckfeder (15) zwischen der Stange (13) und der Hülse (14) jedes Anschlags (12) umfasst.

6. Landwirtschaftliche Maschine nach Anspruch 1, ***dadurch gekennzeichnet,* dass** die Führungsvorrichtung (7) in einer Öffnung (17) jedes Arms (9) gelagert ist, um um eine geometrische Längsachse (18) um einen mittels Anschlägen (19) begrenzten Winkel schwenken zu können.

7. Landwirtschaftliche Maschine nach Anspruch 6, ***dadurch gekennzeichnet,* dass** sie mindestens eine Zugfeder (22) umfasst, die an einem Arm (9) und der Führungsvorrichtung (7) derart befestigt ist, um diese letztgenannte um die geometrische Längsachse (18) in Richtung der Pick-up-Vorrichtung (2) zu schwenken.

8. Landwirtschaftliche Maschine nach Anspruch 1, ***dadurch gekennzeichnet,* dass** die Stützen (10) mit dem Gestell (1) mittels im Wesentlichen horizontalen Achsen (24) verbunden sind, um die sie in verschiedene Positionen verschoben werden können.

9. Landwirtschaftliche Maschine nach Anspruch 8, ***dadurch gekennzeichnet,* dass** Hydraulikzylinder (25) zwischen dem Gestell (1) und den Stützen (10) angeordnet sind, um diese letztgenannten um ihre Gelenkachsen (24) in verschiedene Positionen zu verschieben.

10. Landwirtschaftliche Maschine nach irgend einem der vorhergehenden Ansprüche, ***dadurch gekennzeichnet,* dass** die Stützen (10) mit den Anschlägen (12), den Enden der Arme (9) und Teilen des Gestells (1) verformbare Parallelogramme bilden.
